# FASCICULE DE BREVET EUROPEEN

(11) **EP 1 659 359 B1**
(45) Date de publication et mention de la délivrance du brevet: **07.04.2010**
(21) Numéro de dépôt: 05292311.7
(22) Date de dépôt: 02.11.2005
(51) Int. Cl.: F42B 12/36, C06B 25/12, C06C 15/00, C06D 3/00, F42C 19/08, F41J 9/08, B64C 3/00

(54) **Munition ou composant de munition comprenant un matériau énergétique structural**
Munition oder Munitionsteil mit einem Strukturteil das aus einem energetischen Material hergestellt ist
Ammunition or ammunition part comprising a structural element made of energetic material

(30) Priorité: 22.11.2004 FR 0412401
(43) Date de publication de la demande: 24.05.2006
(60) Demande divisionnaire: 06019954.4
(73) Titulaire: NEXTER Munitions, 78000 Versailles (FR)
(72) Inventeur: Brunet, Luc, 18000 Bourges (FR); Regis, Muriel, 18000 Bourges (FR)
(74) Mandataire: Célanie, Christian

(56) Documents cités:
- DE-A1- 10 238 717
- FR-A- 1 160 953
- FR-A- 2 070 728
- US-A- 2 977 885
- US-A- 2 998 772
- US-A- 3 000 308
- US-A- 3 724 382
- US-A- 3 960 049
- US-A- 4 376 083
- US-A- 5 238 512
- US-A1- 2003 127 009
- US-B1- 6 318 667
- US-B1- 6 666 143

## Description

Le domaine technique de l'invention est celui des munitions ou composants de munition comprenant un chargement pyrotechnique associé à une structure, telle une enveloppe.

Les chargements pyrotechniques connus comprennent habituellement un ou plusieurs matériaux énergétiques, tels que des explosifs ou des compositions pyrotechniques.

Dans les munitions ou composants connus, les matériaux énergétiques sont toujours mis en place dans des enveloppes qui, outre leur fonction par exemple génératrices d'éclats (pour les charges explosives), permettent d'assurer la tenue mécanique du matériau énergétique. Ces enveloppes réduisent la masse de chargement pyrotechnique qui peut être emportée par la munition. Elles constituent ainsi un poids mort qui pénalise les capacités d'emport notamment lorsque la munition considérée est un aéronef léger tel un drône d'observation ou un drône d'attaque. Par ailleurs, elles peuvent constituer un frein à la dégradation naturelle des résidus de la munition dans l'environnement.

Les munitions ou composants connus comprennent habituellement un matériau énergétique conçu pour remplir une seule fonction bien déterminée. Les explosifs assurent ainsi une fonction de destruction. Les compositions pyrotechniques permettent (en fonction de leur nature) d'assurer une fonction de masquage, de leurrage ou bien d'apporter un effet non létal, tel que génération de bruit, de lumière, d'odeurs ou de fumée colorée.

Il peut être souhaitable pour limiter la dotation en munitions, ou pour simplifier la conception de ces munitions, de donner une certaine polyvalence aux chargements embarqués, cela afin de permettre de remplir différentes missions avec une seule munition.

On connaît déjà différent documents, dont le brevet US-2977885 (base pour le préambule de la revendication 1) qui décrit une enveloppe composite multicouche pour munition comportant des feuilles d'aluminium liées les unes aux autres par un explosif associé éventuellement à un liant. Dans ce document, il n'est pas question d'associer au matériau énergétique au moins un matériau de masquage ou de leurrage. Il n'est pas question non plus de prévoir au moins deux dispositifs d'amorçage de la structure.

Le brevet US-3000308 décrit une enveloppe de munition réalisée en un matériau explosif associant des fibres d'aluminium, de verre et de nitrocellulose avec un explosif associé à un liant plastique. Le matériau est enroulé sous la forme de bandes sur un mandrin 14 puis le matériau est cuit. Un explosif peut être coulé à l'intérieur du mandrin portant l'enveloppe énergétique.
Là non plus il n'est question ni de matériaux de masquage ou de leurrage, ni de prévoir au moins deux dispositifs d'amorçage de la structure.

Le brevet US-3724382 décrit une grenade fumigène sans étui. La composition de cette grenade comporte un matériau fumigène (oxyde de zinc et oxydant), une résine plastifiante et une résine polymère ayant une température de combustion supérieure à 1000°C. Cette grenade est dépourvue de moyen de renfort structural et par ailleurs il n'est pas question ici de la mise en oeuvre d'au moins un composant explosif. Il n'est pas plus question de prévoir au moins deux dispositifs d'amorçage.

C'est le but de l'invention que de proposer une munition ou un composant de munition permettant de pallier de tels inconvénients.

Ainsi la munition ou le composant de munition selon l'invention comporte un matériau énergétique ayant par lui-même une tenue mécanique permettant de l'employer comme élément d'enveloppe ou de structure.

Les caractéristiques mécaniques et la légèreté de ce matériau énergétique peuvent ainsi être calculées pour qu'il soit possible de réaliser avec lui tout ou partie du corps ou de la structure d'une munition.

La munition ou le composant de munition selon l'invention peut par ailleurs, selon une variante, mettre en oeuvre un matériau énergétique ayant au moins deux régimes de fonctionnement : un régime explosif et un régime de combustion.

La munition ou le composant de munition selon l'invention peut alors, sans modifications de structure, remplir au moins deux missions différentes : une mission de destruction et une mission de protection par masquage, brouillage, leurrage ou dissuasion non létale.

Ainsi l'invention a pour objet une munition ou un composant de munition comprenant une charge utile associée à une structure d'emport de la charge utile, munition ou composant **caractérisé en ce qu**'une partie au moins de la structure est réalisée en un matériau énergétique comprenant au moins un composant énergétique mélangé à au moins un premier matériau de renfort structural.

Selon une autre caractéristique, la munition ou le composant de munition comporte au moins un dispositif d'amorçage de la structure énergétique, dispositif relié à un moyen de commande .

Le premier matériau de renfort structural pourra comprendre au moins un des matériaux suivants : micro ballons phénoliques, polystyrène en bille, nano tubes de carbone.

Selon une variante de réalisation, la munition ou le composant de munition pourra comporter également un deuxième matériau de renfort structural choisi parmi les fibres longues naturelles ou synthétiques ou les tissus réalisés avec de telles fibres.

Les fibres pourront être choisies parmi les matériaux suivants: fibres de carbone, de verre, de chanvre, de kevlar.

La munition ou le composant de munition pourra ainsi comprendre globalement entre 10 et 35% en masse de matériau de renfort structural.

Avantageusement, la munition ou le composant de munition pourra comprendre au moins un matériau de masquage ou de leurrage.

Le matériau de masquage ou de leurrage pourra être choisi parmi les matériaux suivants : fibres de carbone courtes, poudre de carbone, poudre de laiton, de bronze, paillettes métallisées, fibres polymères revêtues d'un matériau conducteur, phosphore rouge.

Selon un mode de réalisation, la munition ou le composant de munition comportera au moins un composant énergétique qui est un explosif.

Le composant énergétique pourra alors comprendre au moins un explosif fusible associé à un explosif non fusible.

Plus particulièrement la munition ou le composant de munition pourra avoir une partie au moins de sa structure réalisée en un matériau énergétique ayant la composition en masse suivants :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

Plus particulièrement on pourra réaliser une munition ou un composant de munition dont une partie au moins de la structure est réalisée en un matériau énergétique ayant la composition en masse suivants :
- 10 à 30% d'un explosif secondaire fusible,
- 10 à 30% d'un premier matériau de renfort structural,
- 50 à 60% d'explosif secondaire non fusible,
- 0 à 5% de fibres de renfort structural,
- 0 à 5% de matériau de masquage ou leurrage.

Selon un autre mode de réalisation, la munition ou le composant de munition pourra être tel qu'une partie au moins de sa structure sera réalisée en un matériau énergétique ayant la composition en masse suivante :
- 10 à 30% d'un premier matériau de renfort structural,
- 50 à 60% d'explosif secondaire non fusible,
- 10 à 30% de liant synthétique,
- 0 à 5% de fibres de renfort structural,
- 0 à 5% de matériau de masquage ou leurrage.

Selon un exemple particulier de réalisation on pourra réaliser une munition ou un composant de munition dont une partie au moins de la structure sera réalisée en un matériau énergétique ayant la composition en masse suivante :
- 20% de trinitrotoluène,
- 50% d'hexogène,
- 10% de micro ballons,
- 20% de fibres de carbone ou de verre.

Selon un autre exemple de réalisation on pourra réaliser une munition ou un composant de munition dont une partie au moins de la structure sera réalisée en un matériau énergétique ayant la composition en masse suivante :
- 20% de trinitrotoluène,
- 50% d'hexogène,
- 10% de micro ballons,
- 10% de fibres de carbone ou de verre,
- 10% de poudre d'aluminium.

Selon un autre mode de réalisation, la munition ou le composant de munition sera tel qu'au moins un des composants énergétiques sera constitué par une composition pyrotechnique.

La composition pyrotechnique pourra être une composition fumigène ou éclairante.

On pourra ainsi plus particulièrement réaliser une munition ou un composant de munition dont une partie au moins de la structure sera réalisée en un matériau énergétique ayant la composition en masse suivante :
- 75% de composition fumigène,
- 15% d'un premier matériau de renfort structural.

On pourra également réaliser une munition ou un composant de munition dont une partie au moins de la structure sera réalisée en un matériau énergétique ayant la composition en masse suivante :
- 75% de composition éclairante,
- 15% d'un premier matériau de renfort structural.

On pourra également réaliser une munition ou un composant de munition dont une partie au moins de la structure sera réalisée en un matériau énergétique ayant la composition en masse suivants :
- 50% à 65% d'une composition pyrotechnique,
- 10% à 30% d'un premier matériau de renfort structural,
- 15% à 25% de poudre de laiton ou de fibres de carbone ou de verre aluminisées.

Selon une variante de l'invention, la munition ou le composant de munition pourra être tel que le matériau énergétique comprenne au moins un composant explosif et au moins un matériau de masquage ou de leurrage et dans ce cas la munition ou le composant de munition comportera au moins deux dispositifs d'amorçage de la structure énergétique pouvant être initiés par un moyen de commande, un premier dispositif conçu pour communiquer un régime de détonation à la structure assurant ainsi à la munition ou au composant de munition une fonction de destruction et un deuxième dispositif conçu pour communiquer un régime de combustion à la structure assurant ainsi à la munition ou au composant de munition une fonction de masquage ou de leurrage.

Selon une autre variante, la munition ou pourra comprendre une enveloppe réalisée en un matériau énergétique et délimitant une cavité recevant un chargement inerte ou pyrotechnique.

La structure en matériau énergétique pourra être recouverte d'une couche de protection.

L'invention sera mieux comprise à la lecture de la description qui va suivre de modes particuliers de réalisation, description faite en référence aux dessins annexés et dans lesquels :
- la figure 1 représente schématiquement une munition selon un premier mode de réalisation de l'invention, et
- la figure 2 représente schématiquement en vue latérale un autre mode de réalisation d'une munition selon l'invention.

Une munition ou un composant de munition selon l'invention est **caractérisé en ce qu**'une partie au moins de sa structure est réalisée en un matériau énergétique comprenant au moins un composant énergétique mélangé à au moins un premier matériau de renfort structural.

La structure considérée pourra être une enveloppe de la munition, enveloppe délimitant alors un volume renfermant un chargement explosif classique ou bien une composition pyrotechnique.

Selon un mode de réalisation préféré c'est tout le corps de la munition qui constitue lui-même une structure formée par un matériau énergétique structural ayant une tenue mécanique suffisante.

Un moyen essentiel de l'invention est donc constitué par un tel matériau énergétique structural comprenant au moins un composant énergétique mélangé à au moins un matériau de renfort structural.

D'une façon classique on entend par composant énergétique un matériau susceptible de fournir de l'énergie chimique et/ou mécanique sous forme d'une flamme ou d'une onde de détonation lorsqu'il se trouve initié par un composant d'amorçage approprié (inflammateur ou détonateur).

Un composant énergétique peut ainsi avoir un régime de fonctionnement en détonation ou bien simplement un régime de fonctionnement en combustion. On sera assuré d'obtenir un matériau ayant deux modes de fonctionnement si le matériau présente une température de flamme en combustion supérieure à 2000 K et une célérité de détonation supérieure à 3000 m/s.

Les composants énergétiques regroupent principalement les explosifs et les compositions pyrotechniques.

D'une manière générale bien connue, les explosifs sont des mélanges ou des corps purs dont le régime de décomposition fonctionnel est la détonation (vitesse de propagation de la réaction supérieure à 3000 m/s).

Une composition pyrotechnique est une composition oxydo réductrice hétérogène dont le régime de décomposition ou la combustion produit des effets spécifiques : flamme, lumière bruit, fumée, dispersion de substances non létales....

Les composants énergétiques ont ainsi pour objet d'assurer une fonction pyrotechnique donnée : vulnérante pour les explosifs, masquage, leurrage ou non létal pour les compositions pyrotechniques....

Le premier matériau de renfort structural mis en oeuvre comprendra de préférence un matériau permettant un allègement du bloc de matériau énergétique réalisé sans nuire à sa tenue mécanique.

On pourra par exemple adopter un premier matériau de renfort structural qui comprend au moins un des matériaux suivants : sphères creuses (tels que micro ballons phénoliques ou polystyrène en bille), fibres courtes (longueur inférieure à 10 mm) de carbone, fibres végétales ou synthétiques (aramide par exemple), tubes (nanotubes de carbone), autres matériaux pulvérulents. La granulométrie du matériau de renfort ainsi que la forme choisie vont déterminer la qualité de l'adhérence de la charge au liant ainsi que les propriétés mécaniques. L'Homme du Métier choisira le type de matériau de renfort approprié en fonction de la nature du matériau énergétique utilisé et des contraintes mécaniques que la munition devra subir.

De tels matériaux sont disponibles commercialement dans différentes granulométries.

Les micros ballons sont notamment utilisés pour fabriquer des pâtes à sceller les inserts, et de manière générale pour réaliser des matériaux composites ayant une bonne tenue en compression et cisaillement. Ils sont très utilisés pour la réalisation de pièces de structure dans le domaine aéronautique.

On a pu vérifier qu'avec une proportion d'un tel matériau de renfort comprise entre 10% et 35% en masse il était possible de réaliser un bloc de matériau énergétique structural conservant des capacités pyrotechniques intéressantes.

Ainsi on a pu obtenir des explosifs dont la célérité de détonation pouvait aller de 3000m/s (beaucoup de renfort) à 8000 m/s (peu de renfort).

Par ailleurs l'ajout de renforts (tel que des fibres de carbone) dans les compositions pyrotechniques augmente la résistance des comprimés sans diminuer notablement l'efficacité de la composition et sa vitesse de combustion.

L'allégement de la munition peut atteindre ainsi près de 30% et cet allègement présente de nombreux avantages d'un point de vue opérationnel.

Pour une munition classique (projectile, missile, roquette, mine) il permet de faciliter les opérations de transport et de mise en oeuvre logistique.

Pour un projectile autopropulsé tel une roquette ou un missile ou bien un drône, l'allégement de la charge explosive libère de la masse pour l'intégration des autres éléments du projectile (autodirecteur, propulseur, sous munitions).

En fonction des applications envisagées, par exemple pour des munitions ou composants de munitions fortement sollicités mécaniquement, il sera possible de compléter le premier renfort structural par un deuxième renfort comprenant des fibres longues sous la forme de fibres libres ou bien de tissu (longueur de fibres supérieure à 100mm). On pourra utiliser ainsi des fibres ou tissus de carbone, de verre, de chanvre ou de kevlar (marque déposée). Ces fibres seront disposées en fonction des orientations des contraintes mécaniques dans la munition considérée. Il sera également possible d'utiliser des structures de type nids d'abeille.

Les techniques de mise en oeuvre sont celles de la fabrication de pièces composites : coulée d'une matrice sur une charge. La matrice est alors constituée par le matériau énergétique et la charge est constituée par les fibres de renfort.

Les composants énergétiques mis en oeuvre pourront comprendre au moins un explosif.

Cet explosif sera avantageusement un explosif fusible, tel le TNT ou la TNMA (trinitrométhylaniline) qui pourra être associé à un explosif non fusible (tel l'octogène ou l'hexogène).

La plupart des matériaux explosifs ont deux modes stables de fonctionnement possibles (combustion et détonation) qui dépendent du mode d'initiation mis en oeuvre et notamment du niveau d'énergie communiqué par les moyens d'initiation.

Il est possible en mettant en oeuvre un détonateur de communiquer à l'explosif un régime détonant (vitesse de propagation de la réaction supérieure à 3000 m/s).

En mettant en oeuvre un inflammateur on pourra communiquer à l'explosif un régime de combustion (vitesse de réaction inférieure à 1000m/s).

On pourra incorporer au matériau énergétique au moins un matériau de masquage ou de leurrage.

Ainsi, une fonction masquage ou leurrage pourra être obtenue avec le matériau lorsque celui ci est initié avec un régime de combustion.

Comme matériau de masquage on pourra choisir les fibres de carbone courtes (longueur inférieure à 8mm), la poudre de carbone, les poudres métalliques (laiton ou bronze) les poudres d'oxydes métalliques (TiO₂, SiO₂) La granulométrie de ces poudres sera choisie telle que le diamètre médian soit compris entre 10 et 20 µm ou proche de la longueur d'onde du rayonnement incident à masquer.

Comme matériau de leurrage on pourra par exemple utiliser des particules ou des fibres conductrices de longueur inférieure au centimètre (fibres de verre ou polymère revêtues d'un métal conducteur, nano tubes de carbone).

On pourrait également incorporer des granules ou pastilles d'une composition pyrotechnique à base de phosphore dont la combustion par dispersion permettra une saturation de zone par la dispersion de points chauds répartis sur une grande surface.

Lors de la mise en détonation ou en combustion du matériau énergétique, le matériau de masquage ou de leurrage sera dispersé (et éventuellement initié), assurant ainsi la fonction souhaitée.

On pourra ainsi réaliser une munition comprenant un matériau énergétique structural ayant la composition en masse suivante :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

On pourra notamment réaliser une munition comprenant un matériau énergétique structural ayant la composition en masse suivants :
- 10 à 30% d'un explosif secondaire fusible,
- 10 à 30% de micro ballons (phénoliques ou polyuréthanes),
- 50 à 60% d'explosif secondaire non fusible,
- 0 à 5% de fibres de renfort structural,
- 0 à 5% de matériau de masquage ou de leurrage.

Un tel matériau énergétique est mis en oeuvre par coulée.

On pourra aussi réaliser une munition comprenant un matériau énergétique structural ayant la composition en masse suivants :
- 10 à 30% de polystyrène en bille,
- 50 à 60% d'explosif secondaire non fusible,
- 10 à 30% de liant synthétique,
- 0 à 5% de fibres de renfort structural,
- 0 à 5% de matériau de masquage ou leurrage.

Ces derniers matériaux énergétiques sont mis en oeuvre par compression ou par cuisson dans un moule approprié (explosifs composites).

A titre d'exemple, on a réalisé les matériaux énergétiques avec les compositions suivantes :

### Exemple 1

- 20% de Trinitrotoluène,
- 10% de micro ballons (phénoliques ou polyuréthanes),
- 50% d'héxogène,
- 20% de fibres de carbone.

### Exemple 2

- 20% de Trinitrotoluène,
- 10% de micro ballons (phénoliques ou polyuréthane),
- 50% d'héxogène,
- 10% de fibres de carbone,
- 10% de poudre d'Aluminium.

La poudre d'aluminium pourra avoir une granulométrie micrométrique (de l'ordre de 100 micromètres). Elle permet d'accroître l'effet de souffle de la composition.

Ces deux matériaux ont deux régimes de fonctionnement : un régime de combustion et un régime détonant.

Le tableau ci dessous donne pour chaque matériau les vitesses de détonation calculées.

| **Exemple** | **Vitesse de détonation (m/s)** |
|---|---|
| Exemple 1 | 6984 m/s |
| Exemple 2 | 7400 m/s |

Les valeurs sont analogues à celles d'un explosif classique tel l'hexolite 65/35 (65% en masse de trinitrotoluène, 35% d'hexogène) dont la vitesse de détonation est 8000 m/s.

Le matériau selon l'exemple 1 brûle par ailleurs à 2192 K en dispersant du carbone (près de 17% en masse de particules de carbone engendrées). Lorsqu'il est initié en mode combustion, il peut donc assurer une fonction de masquage.

Il est possible de remplacer les fibres de carbone par d'autres matériaux de renfort, par exemple par des fibres de verre aluminisées. Ces fibres seront dispersées lors d'une combustion de la composition, assurant ainsi une fonction de leurrage. La composition peut alors également être initiée en mode de détonation.

On pourra ainsi réaliser une composition associant :

### Exemple 3

- 20% de Trinitrotoluène,
- 10% de micro ballons (phénoliques ou polyuréthane),
- 50% d'héxogène,
- 20% de fibres de verre aluminisées.

On pourra également réaliser une munition comprenant un matériau énergétique structural dans lequel au moins un des composants énergétiques est constitué par une composition pyrotechnique non explosive, par exemple une composition oxydo réductrice.

Cette composition pyrotechnique pourra alors être une composition fumigène, éclairante, éblouissante, colorée ou odoriférante ou exerçant un autre effet (par exemple une composition génératrice de gaz permettant de disperser une substance lacrymogène).

Le matériau selon l'invention, allégé par le renfort structural, permettra la réalisation de munitions moins pénalisantes du point de vue masse tout en ayant une tenue mécanique satisfaisante.

On pourra ainsi utiliser une composition fumigène telle que celles décrites par les brevets FR2560186 et FR2583037, ou une composition incorporant du phosphore rouge (fonction fumigène ou leurrage).

On pourra ainsi réaliser une munition incorporant un matériau énergétique structural ayant la composition en masse suivants :
- 50% à 80% d'une composition pyrotechnique,
- 10% à 30% d'un premier matériau de renfort structural,
- 0 à 5% de fibres longues de renfort structural.

Le premier matériau de renfort structural sera un matériau de type microbilles ou microballons et permettant donc d'alléger le matériau énergétique.

Les fibres longues du second matériau de renfort permettront éventuellement d'améliorer la tenue mécanique du matériau énergétique réalisé.

Comme composition pyrotechnique on pourra mettre en oeuvre une composition fumigène telle qu'une de celles décrites par le brevet FR2583037 et associant une poudre métallique (telle le magnésium), un liant générateur de particules de carbone (tel le naphtalène chloré) et un liant fluoré (tel le polyfluorure de vinylidène).

On pourra également choisir comme composition pyrotechnique une composition éclairante par exemple associant une poudre métallique (telle que le magnésium) et un liant fluoré (tel le polytétrafluoroéthyléne plus connu sous la marque déposée Téflon).

On pourra ainsi réaliser les compositions suivantes :

### Exemple 4

- 15 % de polystyrène en bille,
- 75% de composition fumigène.
   La composition fumigène pourra associer en masse : 17% de magnésium, 70% de naphtalène chloré, 13% de liant fluoré.

### Exemple 5

- 15 % de polystyrène en bille,
- 75% de composition éclairante.

La composition éclairante pourra associer en masse : 54% de magnésium, 30% de polytétrafluoroéthylène et 16% copolymère de chloro- fluoroéthylène (plus connu sous la marque déposée Viton).

On pourra également réaliser un matériau énergétique structural dans lequel on incorporera de la poudre de laiton, des fibres de carbone ou de chaffs à l'intérieur d'une composition pyrotechnique oxydo-réductrice ou bien génératrice de gaz.

Une telle disposition permet de disperser un matériau de masquage ou leurrage (poudre de laiton ou fibres) lors de l'initiation de la composition.

On pourra par exemple réaliser une composition associant:
- 50% à 65% d'une composition pyrotechnique,
- 10% à 30% d'un premier matériau de renfort structural,
- 15% à 25% de poudre de laiton ou de fibres de carbone ou de verre aluminisées.

Le premier matériau de renfort structural sera un matériau de type microbilles ou microballons et permettant donc d'alléger le matériau énergétique.

La composition pyrotechnique sera par exemple une composition associant (proportion en masse) : aluminium (20%) et oxyde de cuivre (80%) ou aluminium (40%) et perchlorate de potassium (60%).

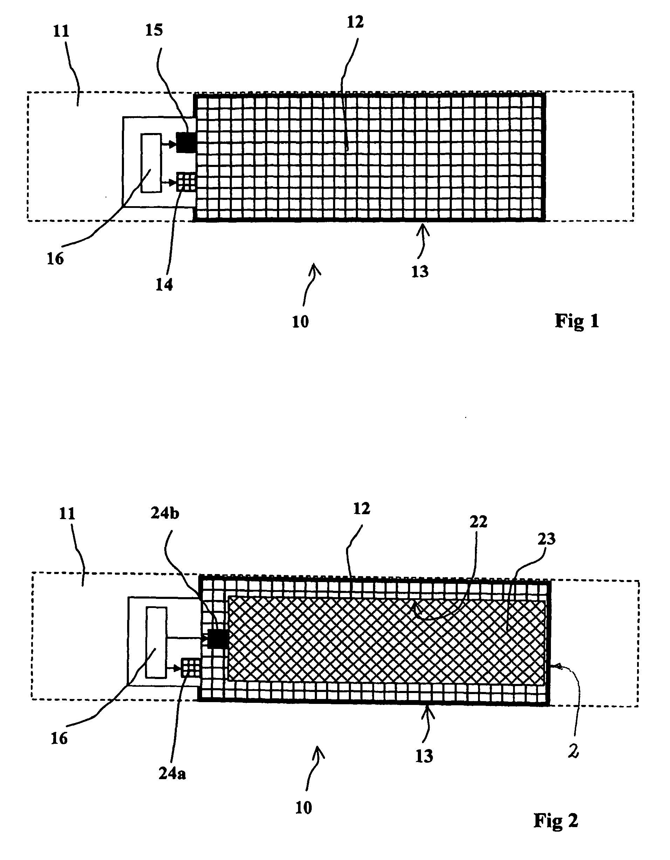

A titre d'exemple de mise en oeuvre, la figure 1 montre une munition 10 selon un mode de réalisation de l'invention, munition qui comprend un étui 11 dont seul le contour est ici représenté en pointillés.

Cet étui renferme une structure ou bloc 12 d'un matériau énergétique structural tel que décrit précédemment. Le bloc 12 est disposé dans une enveloppe 13 qui améliore sa tenue mécanique ainsi que l'étanchéité. L'enveloppe 13 est par exemple constituée par une couche de vernis cellulosique ou bien par un film de matière plastique, par exemple un film de polyéthylène, un matériau thermorétractable, un film aluminisé ou un tissu imprégné d'un liant.

La munition 10 comprend également deux dispositifs d'amorçages différents 14 et 15 qui sont reliés à un moyen de commande 16 (par exemple une fusée électronique programmable).

Le matériau énergétique structural du bloc 12 comprend ici au moins un composant explosif et au moins un matériau de masquage ou de leurrage, tel que des fibres de carbone courtes, des paillettes de leurrage ("chaffs"), une poudre de laiton ou du phosphore rouge.

Le premier dispositif d'amorçage 15 est conçu pour communiquer un régime de détonation au bloc 12. Ce dispositif est constitué par exemple par un détonateur à fil chaud ou explosé ou encore par un initiateur à couche projetée (plus connu sous le nom de "Slapper").

Le deuxième dispositif d'amorçage 14 est conçu pour communiquer un régime de combustion au bloc 12. Ce dispositif est un inflammateur c'est à dire un composant produisant une flamme. On pourra également utiliser une micro torche à plasma (telle que décrite par le brevet FR2768810).

Ainsi, en fonction des besoins opérationnels on pourra faire fonctionner la munition dans un mode destructif (en commandant la mise en détonation du bloc 12) ou bien dans un mode de masquage (en commandant la mise en combustion du bloc 12).

L'invention permet ainsi de définir une munition allégée pouvant avoir deux modes de fonctionnement distincts.

Il est bien entendu possible de définir une munition allégée selon l'invention mettant en oeuvre un matériau n'ayant qu'un seul mode de fonctionnement, par exemple fumigène ou explosif.

D'autres modes de réalisation de l'invention sont possibles.

Ainsi, il est possible selon l'invention de réaliser une munition associant une enveloppe réalisée en un matériau énergétique et délimitant une cavité recevant une composition pyrotechnique classique (explosive ou pyrotechnique) ou une charge inerte dispersable.

La figure 2 montre une munition réalisée selon cette variante.

La structure d'emport 12 est ici constituée par une enveloppe qui délimite une cavité 22 à l'intérieur de laquelle est disposé un chargement classique 23 (explosif ou pyrotechnique). Les moyens d'initiation comprennent un premier initiateur 24a assurant l'initiation de l'enveloppe structurelle 12 et un deuxième initiateur 24b permettant d'initier le chargement 23.

On choisira en fonction des besoins opérationnels d'initier l'enveloppe 12 seule ou bien le chargement 23 qui est disposé dans l'enveloppe. On pourra ainsi disposer comme chargement une charge explosive classique (par exemple associant hexogène et trinitrotoluène) à l'intérieur d'un étui énergétique renfermant des fibres de masquage ou un matériau de leurrage.

Si on initie l'étui on obtient alors un fonctionnement en masquage ou leurrage, le chargement explosif se trouvant par ailleurs brûlé par l'énergie délivrée par l'étui.

Si on initie le chargement embarqué lui-même en mode détonation on obtient un effet destructif.

Il serait bien entendu possible de remplacer le chargement 23 par une charge utile de masquage ou leurrage (fibres de carbone, poudre de laiton, paillettes réfléchissantes). L'initiation de la structure enveloppe 12 pourra alors assurer la dispersion de la charge utile.

Conformément à l'invention, on pourra également réaliser un composant de munition, par exemple un inflammateur ou bien un détonateur, à partir d'un matériau énergétique comprenant au moins un composant énergétique mélangé à au moins un matériau de renfort structural.

L'invention permet ainsi de supprimer les étuis métalliques renfermant habituellement les compositions d'initiation. On pourra soit mettre en place une composition d'initiation classique dans un godet réalisé en un matériau énergétique structural, soit réaliser une composition d'initiation incorporant un matériau de renfort structural.

On pourra ainsi également réaliser des tubes allumeurs pour munition d'artillerie ou bien des têtes militaires explosives à charge formée.

## Revendications

1. Munition (10) ou composant de munition comprenant une charge utile associée à une structure (12) d'emport de la charge utile, une partie au moins de la structure (12) étant réalisée en un matériau énergétique comprenant au moins un composant énergétique mélangé à au moins un premier matériau de renfort structural, **caractérisé en ce que** le matériau énergétique comprend au moins un composant explosif et au moins un matériau de masquage ou de leurrage et **en ce que** la munition ou le composant de munition comporte au moins deux dispositifs d'amorçage (14, 15) de la structure énergétique pouvant être initiés par un moyen de commande (16), un premier dispositif (15) conçu pour communiquer un régime de détonation à la structure (12) assurant ainsi à la munition ou au composant de munition une fonction de destruction et un deuxième dispositif (14) conçu pour communiquer un régime de combustion à la structure (12) assurant ainsi à la munition ou au composant de munition une fonction de masquage ou leurrage.

2. Munition ou composant de munition selon la revendication 1, **caractérisé en ce que** le premier matériau de renfort structural comprend au moins un des matériaux suivants : micro ballons phénoliques, polystyrène en bille, nano tubes de carbone.

3. Munition ou composant de munition selon la revendication 1 ou 2, **caractérisé en ce qu'**elle comporte également un deuxième matériau de renfort structural choisi parmi les fibres longues naturelles ou synthétiques ou les tissus réalisés avec de telles fibres.

4. Munition ou composant de munition selon la revendication 3, **caractérisé en ce que** les fibres sont choisies parmi les matériaux suivants: fibres de carbone, de verre, de chanvre, de kevlar.

5. Munition ou composant de munition selon une des revendications 1 à 4, **caractérisé en ce qu'**elle comprend globalement entre 10 et 35% en masse de matériau de renfort structural.

6. Munition ou composant de munition selon l'une quelconque des revendications 1 à 5, **caractérisée en ce que** le matériau de masquage ou de leurrage est choisi parmi les matériaux suivants : fibres de carbone courtes, poudre de carbone, poudre de laiton, de bronze, paillettes métallisées, fibres polymères revêtues d'un matériau conducteur, phosphore rouge.

7. Munition ou composant de munition selon une des revendications 1 à 6, **caractérisé en ce qu'**au moins un des composants énergétiques est un explosif.

8. Munition ou composant de munition selon la revendication 7, **caractérisé en ce que** le composant énergétique comprend au moins un explosif fusible associé à un explosif non fusible.

9. Munition ou composant de munition selon une des revendications 7 ou 8, **caractérisée en ce qu'**une partie au moins de la structure est réalisée en un matériau énergétique ayant la composition en masse suivants :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

10. Munition ou composant de munition selon la revendication 9, **caractérisé en ce qu'**une partie au moins de la structure est réalisée en un matériau énergétique ayant la composition en masse suivante :
- 10 à 30% d'un explosif secondaire fusible,
- 10 à 30% d'un premier matériau de renfort structural,
- 50 à 60% d'explosif secondaire non fusible,
- 0 à 5% de fibres de renfort structural,
- 0 à 5% de matériau de masquage ou leurrage.

11. Munition ou composant de munition selon la revendication 9, **caractérisé en ce qu'**une partie au moins de la structure est réalisée en un matériau énergétique ayant la composition en masse suivants :
- 10 à 30% d'un premier matériau de renfort structural,
- 50 à 60% d'explosif secondaire non fusible,
- 10 à 30% de liant synthétique,
- 0 à 5% de fibres de renfort structural,
- 0 à 5% de matériau de masquage ou leurrage.

12. Munition ou composant de munition selon la revendication 10, **caractérisé en ce qu'**une partie au moins de la structure est réalisée en un matériau énergétique ayant la composition en masse suivante :
- 20% de trinitrotoluène,
- 50% d'hexogène,
- 10% de micro ballons,
- 20% de fibres de carbone ou de verre.

13. Munition ou composant de munition selon la revendication 10, **caractérisé en ce qu'**une partie au moins de la structure est réalisée en un matériau énergétique ayant la composition en masse suivante :
- 20% de trinitrotoluène,
- 50% d'hexogène,
- 10% de micro ballons,
- 10% de fibres de carbone ou de verre,
- 10% de poudre d'aluminium.

14. Munition ou composant de munition selon une des revendications 1 à 6, **caractérisé en ce qu'**au moins un des composants énergétiques est constitué par une composition pyrotechnique.

15. Munition ou composant de munition selon la revendication 14, **caractérisé en ce que** la composition pyrotechnique est une composition fumigène ou éclairante.

16. Munition ou composant de munition selon la revendication 15, **caractérisé en ce qu'**une partie au moins de la structure est réalisée en un matériau énergétique ayant la composition en masse suivante :
- 75% de composition fumigène,
- 15% d'un premier matériau de renfort structural.

17. Munition ou composant de munition selon la revendication 15, **caractérisé en ce qu'**une partie au moins de la structure est réalisée en un matériau énergétique ayant la composition en masse suivante :
- 75% de composition éclairante,
- 15% d'un premier matériau de renfort structural.

18. Munition ou composant de munition selon la revendication 14, **caractérisé en ce qu'**une partie au moins de la structure est réalisée en un matériau énergétique ayant la composition en masse suivante :
- 50% à 65% d'une composition pyrotechnique,
- 10% à 30% d'un premier matériau de renfort structural,
- 15% à 25% de poudre de laiton ou de fibres de carbone ou de verre aluminisées.

19. Munition ou composant de munition selon une des revendications 1 à 18, **caractérisée en ce qu'**elle comprend une enveloppe (12) réalisée en un matériau énergétique et délimitant une cavité (22) recevant un chargement (23) inerte ou pyrotechnique.

20. Munition ou composant de munition selon une des revendications 1 à 19, **caractérisé en ce que** la structure en matériau énergétique est recouverte d'une couche de protection.

## Claims

1. A piece of ammunition (10) or ammunition component comprising a payload associated with a structure (12) to carry the payload, at least one part of the structure (12) is made of an energetic material comprising at least one energetic component mixed with at least a first structural reinforcement material, **characterised in that** the energetic material comprises at least one explosive component and at least one masking or decoying material and **in that** the piece of ammunition or ammunition component will incorporate at least two priming devices (14, 15) for the energetic structure able to be ignited by control means (16), a first device (15) designed to communicate a detonation regime to the structure (12) thereby ensuring a destructive function for the piece of ammunition or ammunition component and a second device (14) designed to communicate a combustive regime to the structure (12) and thereby ensuring a masking or decoying function for the piece of ammunition or ammunition component.

2. A piece of ammunition or ammunition component according to Claim 1, **characterized by** the fact that the first structural reinforcement material comprises at least one of the following materials: phenolic micro balloons, polystyrene balls, carbon nanotubes.

3. A piece of ammunition or ammunition component according to one of Claims 1 to 2, **characterized by** the fact that it also incorporates a second structural reinforcement material selected from among long natural or synthetic fibres or materials made using such fibres.

4. A piece of ammunition or ammunition component according to Claim 3, **characterized by** the fact that the fibres are selected from among the following materials: carbon, glass, hemp, Kevlar fibres.

5. A piece of ammunition or ammunition component according to one of Claims 1 to 4, **characterized by** the fact that it globally comprises between 10 and 35% in mass of structural reinforcement material.

6. A piece of ammunition or ammunition component according to one of Claims 1 to 5, **characterized by** the fact that the masking or decoying material is selected from among the following materials: short carbon fibres, carbon powder, brass powder, bronze powder, metallic flakes, polymer fibres coated with a conductive material, red phosphorus.

7. A piece of ammunition or ammunition component according to one of Claims 1 to 6, **characterized by** the fact that at least one of the energetic component is an explosive.

8. A piece of ammunition or ammunition component according to Claim 7, **characterized by** the fact that the energetic component comprises at least one fusible explosive associated with one non-fusible explosive.

9. A piece of ammunition or ammunition component according to one of Claims 7 or 8, **characterized by** the fact that its structure is at least partly made of an energetic material having the following composition in mass:
- 65 to 90% of an explosive composition associating one or several explosive materials and possible a binder,
- 10 to 30% of a first structural reinforcement material,
- 0 to 5% of a second structural reinforcement material in the form of long fibres.

10. A piece of ammunition or ammunition component according to Claim 9, **characterized by** the fact that its structure is at least partly made of an energetic material having the following composition in mass:
- 10 to 30% of a secondary fusible explosive,
- 10 to 30% of a first structural reinforcement material,
- 50 to 60% of a secondary non-fusible explosive,
- 0 to 5% of structural reinforcement fibres,
- 0 to 5% of masking or decoying materials.

11. A piece of ammunition or ammunition component according to Claim 9, **characterized by** the fact that its structure is at least partly made of an energetic material having the following composition in mass:
- 10 to 30% of a first structural reinforcement material,
- 50 to 60% of a secondary non-fusible explosive,
- 10 to 30% of a synthetic binder,
- 0 to 5% of structural reinforcement fibres,
- 0 to 5% of masking or decoying materials.

12. A piece of ammunition or ammunition component according to Claim 10, **characterized by** the fact that its structure is at least partly made of an energetic material having the following composition in mass:
- 20% of trinitrotoluene,
- 50% of cyclonite,
- 10% of micro balloons,
- 20% of carbon or glass fibres.

13. A piece of ammunition or ammunition component according to Claim 10, **characterized by** the fact that its structure is at least partly made of an energetic material having the following composition in mass:
- 20% of trinitrotoluene,
- 50% of cyclonite,
- 10% of micro balloons,
- 10% of carbon or glass fibres,
- 10% of aluminium powder.

14. A piece of ammunition or ammunition component according to one of Claims 1 to 6, **characterized by** the fact that at least one of the energetic components is constituted by a pyrotechnic composition.

15. A piece of ammunition or ammunition component according to Claim 14, **characterized by** the fact that the pyrotechnic composition is a smoke-producing composition or a flare.

16. A piece of ammunition or ammunition component according to Claim 15, **characterized by** the fact that its structure is at least partly made of an energetic material having the following composition in mass:
- 75% of smoke-producing composition,
- 15% of a first structural reinforcement material.

17. A piece of ammunition or ammunition component according to Claim 15, **characterized by** the fact that its structure is at least partly made of an energetic material having the following composition in mass:
- 75% of a light-producing composition,
- 15% of a first structural reinforcement material.

18. A piece of ammunition or ammunition component according to Claim 14, **characterized by** the fact that its structure is at least partly made of an energetic material having the following composition in mass:
- 50 to 65% of a pyrotechnic composition,
- 10 to 30% of a first structural reinforcement material,
- 15 to 25% of a brass powder or carbon fibres or aluminised glass.

19. A piece of ammunition or ammunition component according to one of Claims 1 to 18, **characterized by** the fact that it comprises a casing (12) made of an energetic material and delimiting a cavity (22) to receive and inert or pyrotechnic load (23).

20. A piece of ammunition or ammunition component according to one of Claims 1 to 19, **characterized by** the fact that the energetic material structure is covered with a protective layer.

## Patentansprüche

1. Munition (10) oder Munitionskomponente umfassend eine Nutzlast, die mit einer Struktur (12) zur Mitnahme der Nutzlast verknüpft ist, wobei wenigstens ein Teil der Struktur (12) aus einem energetischen Material hergestellt ist, das wenigstens eine energetische Komponente umfasst, die mit wenigstens einem ersten strukturellen Verstärkungsmaterial vermengt ist, **dadurch gekennzeichnet, dass** das energetische Material wenigstens eine explosive Komponente und wenigstens ein Material zur Tarnung oder Ablenkung umfasst und dass die Munition oder die Munitionskomponente wenigstens zwei Zündvorrichtungen (14, 15) der energetischen Struktur umfasst, die durch ein Steuermittel (16) initiiert werden können, wobei eine erste Vorrichtung (15) dafür ausgelegt ist, um einen Detonations-Betriebszustand an die Struktur (12) zu übertragen, was so der Munition oder der Munitionskomponente eine Zerstörungsfunktion zusichert, und eine zweite Vorrichtung (14) dafür ausgelegt ist, um einen Verbrennungs-Betriebszustand der Struktur (12) zu übermitteln, was so der Munition oder der Munitionskomponente eine Tarnungs- oder Ablenkungsfunktion zusichert.

2. Munition oder Munitionskomponente nach Anspruch 1, **dadurch gekennzeichnet, dass** das erste strukturelle Verstärkungsmaterial wenigstens eines der folgenden Materialien umfasst: Phenol-Mikroballons, Polystyrolkugeln, Nanoröhrchen aus Karbon.

3. Munition oder Munitionskomponente nach Anspruch 1 oder 2, **dadurch gekennzeichnet, dass** sie ebenfalls ein zweites strukturelles Verstärkungsmaterial umfasst, das aus den natürlichen oder synthetischen langen Fasern oder den mit derartigen Fasern hergestellten Geweben ausgewählt wird.

4. Munition oder Munitionskomponente nach Anspruch 3, **dadurch gekennzeichnet, dass** die Fasern aus den folgenden Materialien ausgewählt werden: Fasern aus Kohle, Glas, Hanf oder Kevlar.

5. Munition oder Munitionskomponente nach einem der Ansprüche 1 bis 4, **dadurch gekennzeichnet, dass** sie im Großen und Ganzen zwischen 10 und 35% in Masse von strukturellem Verstärkungsmaterial umfasst.

6. Munition oder Munitionskomponente nach einem der Ansprüche 1 bis 5, **dadurch gekennzeichnet, dass** das Material zur Tarnung oder Ablenkung aus den folgenden Materialien ausgewählt wird: Kurze Kohlefasern, Kohlepulver, Pulver von Messing, Bronze, metallisierte Düppel, mit einem leitfähigen Material beschichtete Polymerfasern, roter Phosphor.

7. Munition oder Munitionskomponente nach einem der Ansprüche 1 bis 6, **dadurch gekennzeichnet, dass** wenigstens einer der energetischen Komponenten ein Sprengstoff ist.

8. Munition oder Munitionskomponente nach Anspruch 7, **dadurch gekennzeichnet, dass** die energetische Komponente wenigstens einen schmelzbaren Sprengstoff umfasst, der mit einem nicht schmelzbaren Sprengstoff verknüpft ist.

9. Munition oder Munitionskomponente nach einem der Ansprüche 7 oder 8, **dadurch gekennzeichnet, dass** wenigstens ein Teil der Struktur aus einem energetischen Material hergestellt ist, das die folgende Zusammensetzung in Masse aufweist:
- 65 bis 90% einer explosiven Zusammensetzung, die ein oder mehrere explosive Materialien und eventuell ein Bindemittel verknüpft,
- 10 bis 30% eines ersten strukturellen Verstärkungsmaterials,
- 0 bis 5% eines zweiten Verstärkungsmaterials in Form von langen Fasern.

10. Munition oder Munitionskomponente nach Anspruch 9, **dadurch gekennzeichnet, dass** wenigstens ein Teil der Struktur aus einem energetischen Material hergestellt ist, das die folgende Zusammensetzung in Masse aufweist:
- 10 bis 30% eines zweiten schmelzbaren Sprengstoffes,
- 10 bis 30% eines ersten strukturellen Verstärkungsmaterials,
- 50 bis 60% eines zweiten nicht schmelzbaren Sprengstoffes,
- 0 bis 5% Fasern zur strukturellen Verstärkung,
- 0 bis 5% Material zur Tarnung oder Ablenkung.

11. Munition oder Munitionskomponente nach Anspruch 9, **dadurch gekennzeichnet, dass** wenigstens ein Teil der Struktur aus einem energetischen Material hergestellt ist, das die folgende Zusammensetzung in Masse aufweist:
- 10 bis 30% eines ersten strukturellen Verstärkungsmaterials,
- 50 bis 60% eines zweiten nicht schmelzbaren Sprengstoffes,
- 10 bis 30% synthetisches Bindemittel,
- 0 bis 5% Fasern zur strukturellen Verstärkung,
- 0 bis 5% Material zur Tarnung oder Ablenkung.

12. Munition oder Munitionskomponente nach Anspruch 10, **dadurch gekennzeichnet, dass** wenigstens ein Teil der Struktur aus einem energetischen Material hergestellt ist, das die folgende Zusammensetzung in Masse aufweist:
- 20% Trinitrotoluol,
- 50% Hexogen,
- 10% Mikroballons,
- 20% Fasern aus Kohle oder Glas.

13. Munition oder Munitionskomponente nach Anspruch 10, **dadurch gekennzeichnet, dass** wenigstens ein Teil der Struktur aus einem energetischen Material hergestellt ist, das die folgende Zusammensetzung in Masse aufweist:
- 20% Trinitrotoluol,
- 50% Hexogen,
- 10% Mikroballons,
- 10% Fasern aus Kohle oder Glas,
- 10% Aluminiumpulver.

14. Munition oder Munitionskomponente nach einem der Ansprüche 1 bis 6, **dadurch gekennzeichnet, dass** wenigstens eine der energetischen Komponenten von einer pyrotechnischen Zusammensetzung gebildet wird.

15. Munition oder Munitionskomponente nach Anspruch 14, **dadurch gekennzeichnet, dass** die pyrotechnische Zusammensetzung eine Raucherzeuger- oder Leucht-Zusammensetzung ist.

16. Munition oder Munitionskomponente nach Anspruch 15, **dadurch gekennzeichnet, dass** wenigstens ein Teil der Struktur aus einem energetischen Material hergestellt ist, das die folgende Zusammensetzung in Masse aufweist:
- 75% Raucherzeuger-Zusammensetzung,
- 15% eines ersten strukturellen Verstärkungsmaterials.

17. Munition oder Munitionskomponente nach Anspruch 15, **dadurch gekennzeichnet, dass** wenigstens ein Teil der Struktur aus einem energetischen Material hergestellt ist, das die folgende Zusammensetzung in Masse aufweist:
- 75% Leucht-Zusammensetzung,
- 15% eines ersten strukturellen Verstärkungsmaterials.

18. Munition oder Munitivnskomponente nach Anspruch 14, **dadurch gekennzeichnet, dass** wenigstens ein Teil der Struktur aus einem energetischen Material hergestellt ist, das die folgende Zusammensetzung in Masse aufweist:
- 50% bis 65% einer pyrotechnischen Zusammensetzung,
- 10% bis 30% eines ersten strukturellen Verstärkungsmaterials,
- 15% bis 25% Messingpulver oder aluminisierte Fasern aus Karbon oder aus Glas.

19. Munition oder Munitionskomponente nach einem der Ansprüche 1 bis 18, **dadurch gekennzeichnet, dass** sie eine Hülle (12) umfasst, die aus einem energetischen Material hergestellt ist und einen Hohlraum (22) abgrenzt, der eine energielose oder pyrotechnische Ladung (23) aufnimmt.

20. Munition oder Munitionskomponente nach einem der Ansprüche 1 bis 19, **dadurch gekennzeichnet, dass** die Struktur aus energetischem Material mit einer Schutzschicht beschichtet ist.
